# EUROPEAN PATENT APPLICATION

(11) **EP 4 682 604 A1**
(43) Date of publication of application: **21.01.2026**
(21) Application number: 24878851.5
(22) Date of filing: 30.09.2024
(51) Int. Cl.: G02B 6/44

(54) **LARGE-WATER-DEPTH OPTICAL FIBER SPLICING BOX**

(30) Priority: 19.10.2023 CN 202322821089 U
(71) Applicant: Zhongtian Technology Marine Systems Co., Ltd., Nantong, Jiangsu 226010 (CN); Jiangsu Zhongtian Technology Co., Ltd., Nantong, Jiangsu 226000 (CN); Zhongtian Technology Submarine Cable Co., Ltd., Jiangsu 226000 (CN)
(72) Inventor: FENG, Yawen, Nantong, Jiangsu 226010 (CN); ZHANG, Suhao, Nantong, Jiangsu 226010 (CN); XIE, Shuhong, Nantong, Jiangsu 226010 (CN); GUO, Chaoyang, Nantong, Jiangsu 226010 (CN); LU, Qi, Nantong, Jiangsu 226010 (CN); GE, Zhixiao, Nantong, Jiangsu 226010 (CN); DONG, Wulei, Nantong, Jiangsu 226010 (CN)
(74) Representative: J A Kemp LLP
(86) International application number: PCT/CN2024/122762
(87) International publication number: WO 2025/082207

(57) **Abstract**

The present application relates to the technical field of optical fiber splicing boxes. Provided is a large-water-depth optical fiber splicing box, including a cylinder and a first sealing assembly, where an optical fiber channel is provided at two ends of the cylinder, and the optical fiber channel includes a large-diameter section and a small-diameter section; and the first sealing assembly includes a V-shaped sealing unit and a locking shaft, the V-shaped sealing unit has a V-shaped sealing ring, the V-shaped sealing ring is fitted to an optical unit and the large-diameter section respectively, a V-shaped opening of the V-shaped sealing ring faces an outer side end of the large-diameter section, the locking shaft is arranged at the outer side end of the large-diameter section, and the locking shaft abuts against the V-shaped sealing unit. In the present application, by providing the cylinder, the pressure bearing performance and the internal space are increased; by the V-shaped sealing unit, the optical fiber channel is sealed, such that the V-shaped sealing ring can be fitted to the optical unit and an inner wall of the large-diameter section more tightly under an external pressure; and the locking shaft can tightly press the V-shaped sealing unit, thereby solving the problem in the prior art of relatively poor pressure bearing performance and sealing performance of an optical fiber splicing box under a large-water-depth working condition.

## Description

The present application claims priority to Chinese Patent Application No. 202322821089.5 filed with China National Intellectual Property Administration on October 19, 2023 and entitled "Large-Water-Depth Optical Fiber Splicing Box", which is hereby incorporated by reference in its entirety.

### TECHNICAL FIELD

The present application relates to the technical field of optical fiber splicing boxes, and in particular to a large-water-depth optical fiber splicing box.

### BACKGROUND

With the development of offshore wind power generation and submarine oil and gas exploitation, the laying quantity of large-water-depth submarine cables and optical cables is increasing year by year, and the problems existing in the application process have become increasingly prominent. When submarine optical cables and submarine cables are damaged by tension or other external impact, it is necessary to make a repair joint box to repair them. The underwater environment is harsh, and it is particularly important to ensure the sealing of the repair joint box especially under large-water-depth working conditions, which is also a research difficulty in the industry.

At present, composite submarine cable optical fiber splicing boxes in the industry are mainly of square shell structure, using single-type sealing rings, and often being used in working conditions with sealing requirements within 200 meters underwater. The square shell has poor pressure bearing performance, and will be crushed or damaged due to instability caused by external pressure under large-water-depth working conditions. If the external pressure corresponding to large water depth is taken as the design parameter, the calculated thickness of the shell will be very large, the processing difficulty and cost will increase significantly, and the increase in its own weight will also bring great inconvenience to installation. The sealing between the cable core PE sheath and the sealing seat in conventional optical fiber splicing boxes is mainly realized by filling a sealing ring (mainly cylindrical rings), and its sealing principle is to realize low-pressure sealing by using interference fit. Due to the single configuration, small contact area with the cable core, and susceptibility to deformation, the sealing ring cannot meet the requirements of the joint box under large-water-depth external pressure working conditions.

### SUMMARY

The present application provides a large-water-depth optical fiber splicing box to solve the problem in the prior art that the pressure bearing performance and the sealing performance of an optical fiber splicing box is relatively poor under a large-water-depth working condition.

The present application provides a large-water-depth optical fiber splicing box, including: a cylinder and a first sealing assembly;
two opposite ends of the cylinder are each provided with an optical fiber channel communicating with an interior of the cylinder, and the optical fiber channel includes a large-diameter section and a small-diameter section sequentially arranged from outside to inside;
the first sealing assembly is equal in quantity to the optical fiber channel and corresponds one-to-one with the optical fiber channel; the first sealing assembly includes a V-shaped sealing unit and a locking shaft; the V-shaped sealing unit is annular; the V-shaped sealing unit is arranged in the large-diameter section, and the V-shaped sealing unit is sleeved on an optical unit; the V-shaped sealing unit has at least one V-shaped sealing ring; an inner side edge of the V-shaped sealing ring is fitted to a peripheral wall of the optical unit; an outer side edge of the V-shaped sealing ring is fitted to an inner wall of the large-diameter section; a V-shaped opening of the V-shaped sealing ring faces an outer side end of the large-diameter section; the locking shaft is arranged at the outer side end of the large-diameter section; the locking shaft is provided with a through hole for the optical unit to pass through; the locking shaft abuts against the V-shaped sealing unit, such that a junction between the large-diameter section and the small-diameter section abuts against the V-shaped sealing unit.

According to the large-water-depth optical fiber splicing box provided by the present application, the V-shaped sealing unit includes a pressure ring, the V-shaped sealing ring and a support ring sequentially arranged from outside to inside; cross-sections of sides of the pressure ring and the support ring facing the V-shaped sealing ring are both V-shaped; the pressure ring and the support ring are both tightly fitted to the V-shaped sealing ring; and the pressure ring abuts against the locking shaft.

According to the large-water-depth optical fiber splicing box provided by the present application, the locking shaft is provided with an external thread, and the locking shaft is threadedly connected with the large-diameter section.

According to the large-water-depth optical fiber splicing box provided by the present application, the large-water-depth optical fiber splicing box further includes a second sealing assembly; the second sealing assembly is equal in quantity to the optical fiber channel and corresponds one-to-one with the optical fiber channel; the second sealing assembly includes a sealing seat; the sealing seat is provided with a sealing hole communicating with the optical fiber channel; the sealing seat is connected to an end part of the cylinder; the sealing seat is adjacent to or abuts against the locking shaft.

According to the large-water-depth optical fiber splicing box provided by the present application, the sealing seat is provided with a limiting groove, and a part of the locking shaft is located in the limiting groove.

According to the large-water-depth optical fiber splicing box provided by the present application, the second sealing assembly further includes a sealing member, and the sealing member is arranged between the optical unit and an inner wall of the sealing hole.

According to the large-water-depth optical fiber splicing box provided by the present application, the sealing hole is a conical hole, an end with a larger diameter of the conical hole faces away from the locking shaft, the sealing member is a conical sealing ring, and the sealing member is sleeved on the optical unit.

According to the large-water-depth optical fiber splicing box provided by the present application, the second sealing assembly further includes a first pressure plate, the first pressure plate is arranged on a side of the sealing member facing away from the locking shaft, the first pressure plate is connected to the sealing seat, and the first pressure plate abuts against the sealing member.

According to the large-water-depth optical fiber splicing box provided by the present application, the large-water-depth optical fiber splicing box further includes an armoring fixing assembly; the armoring fixing assembly is arranged inside the cylinder; the armoring fixing assembly is configured to fix an armoring layer of the optical unit extending into the cylinder.

According to the large-water-depth optical fiber splicing box provided by the present application, the armoring fixing assembly includes a second pressure plate; the second pressure plate is connected to an inner side wall of the cylinder, so as to clamp the armoring layer of the optical unit between the second pressure plate and the inner side wall of the cylinder.

In the large-water-depth optical fiber splicing box of the present application, by arranging a cylindrical cylinder, the existing square structure is replaced, thereby increasing the pressure bearing performance and internal space of the cylinder; by sealing the optical fiber channel using the V-shaped sealing unit, seawater is prevented from entering the interior of the cylinder, and the V-shaped sealing ring of the V-shaped sealing unit can be fitted to the optical unit and the inner wall of the large-diameter section more tightly under external pressure, such as seawater pressure, and the greater the pressure, the tighter the fitting, forming a self-sealing structure, which can perfectly adapt to large-water-depth working conditions; the locking shaft can tightly press the V-shaped sealing unit to prevent the V-shaped sealing unit from moving, and can also enable the sealing effect of the V-shaped sealing unit better, thereby effectively solving the problem in the prior art of relatively poor pressure bearing performance and sealing performance of the optical fiber splicing box under large-water-depth working conditions.

### BRIEF DESCRIPTION OF DRAWINGS

To describe the technical solutions of the present utility model or in the prior art more clearly, the following briefly introduces the accompanying drawings needed for describing the embodiments or the prior art. Apparently, the accompanying drawings in the following description are merely some embodiments of the present utility model, and for the persons of ordinary skill in the art, they may still derive other drawings from these accompanying drawings without creative effort.
FIG. 1 is a schematic structural diagram of a large-water-depth optical fiber splicing box provided by the present utility model.
FIG. 2 is a partial enlarged schematic diagram of area A in FIG. 1 provided by the present utility model.
FIG. 3 is a side view of a large-water-depth optical fiber splicing box provided by the present utility model.

Reference signs:
1. cylinder; 11. sealing end cover; 12. o-shaped sealing ring; 13. fiber fusion tray;
2. first sealing assembly; 21. V-shaped sealing unit; 211. V-shaped sealing ring; 212. pressure ring; 213. support ring; 22. locking shaft;
3. second sealing assembly; 31. sealing seat; 32. sealing member; 33. first pressure plate;
4. armoring fixing assembly;
200. optical unit; 201. armoring layer.

### DESCRIPTION OF EMBODIMENTS

To make the objectives, technical solutions, and advantages of the present application clearer, the following clearly and comprehensively describes the technical solutions of the present application with reference to the accompanying drawings of the present application. Apparently, the described embodiments are merely some rather than all embodiments of the present application. All other embodiments obtained by persons of ordinary skill in the art based on embodiments of the present application without creative effort shall fall within the protection scope of the present application.

In the description of the embodiments of the present application, it should be noted that, unless otherwise clearly specified and defined, the terms "communicate" and "connect" shall be understood in a broad sense; for example, they may refer to fixed connection, detachable connection, or integral connection; they may refer to mechanical connection or electrical connection; or they may refer to direct connection or indirect connection through an intermediate medium. For a person of ordinary skill in the art, the specific meanings of the above terms in the embodiments of the present application can be understood according to specific situations.

In the description of the embodiments of the present application, it should be noted that the orientations or positional relationships indicated by the terms "center", "top", "bottom", "inner" and "outer" are based on the orientations or positional relationships shown in the accompanying drawings, and are only for the convenience of describing the embodiments of the present application and simplifying the description, rather than indicating or implying that the device or element referred to must have a specific orientation, or be constructed and operated in a specific orientation, and thus they shall not be construed as a limitation on the embodiments of the present application.

In addition, the terms "first" and "second" are only used for descriptive purpose, and shall not be understood as indicating or implying relative importance or implicitly indicating the number of technical features indicated. Therefore, the features defined with "first" and "second" may explicitly or implicitly include one or more such features. In the description of the present application, the meaning of "a plurality of" is two or more, unless otherwise clearly and specifically defined.

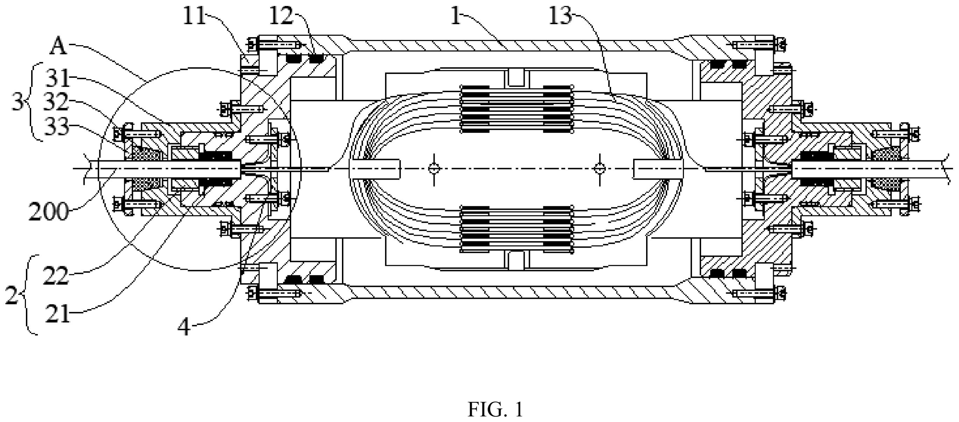

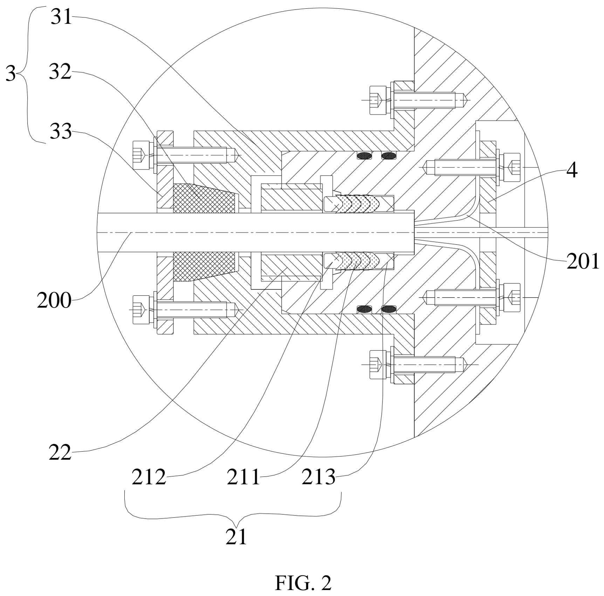

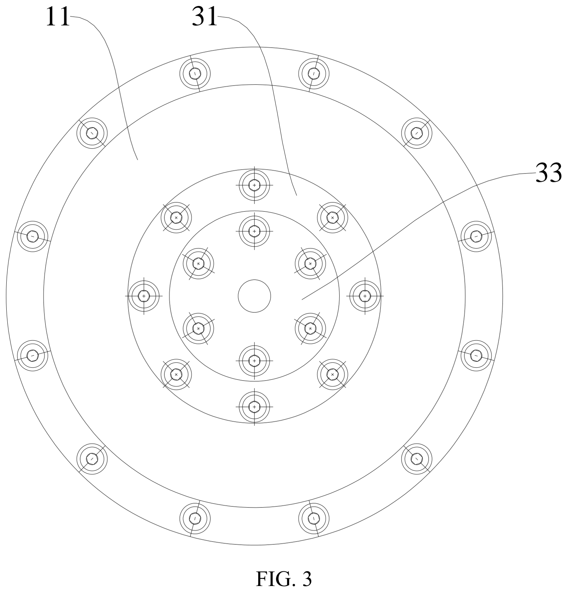

The large-water-depth optical fiber splicing box of the present application is described below with reference to FIGS. 1-3.

As shown in FIGS. 1-3, a large-water-depth optical fiber splicing box includes: a cylinder 1 and a first sealing assembly 2; two opposite ends of the cylinder 1 are each provided with an optical fiber channel communicating with an interior thereof, and the optical fiber channel includes a large-diameter section and a small-diameter section sequentially arranged from outside to inside; the first sealing assemblies 2 is equal in quantity to the optical fiber channel and corresponds one-to-one with the optical fiber channel; the first sealing assembly 2 includes a V-shaped sealing unit 21 and a locking shaft 22; the V-shaped sealing unit 21 is annular; the V-shaped sealing unit 21 is arranged in the large-diameter section, and the V-shaped sealing unit 21 is sleeved on the optical unit 200; the V-shaped sealing unit 21 has at least one V-shaped sealing ring 211; an inner side edge of the V-shaped sealing ring 211 is fitted to a peripheral wall of the optical unit 200; an outer side edge of the V-shaped sealing ring 211 is fitted to an inner wall of the large-diameter section; a V-shaped opening of the V-shaped sealing ring 211 faces an outer side end of the large-diameter section; the locking shaft 22 is arranged at the outer side end of the large-diameter section; the locking shaft 22 is provided with a through hole for the optical unit 200 to pass through; the locking shaft 22 abuts against the V-shaped sealing unit 21, such that a junction between the large-diameter section and the small-diameter section abuts against the V-shaped sealing unit 21.

Specifically, the two opposite ends of the cylinder 1 are both open, and the two opposite ends of the cylinder 1 are each provided with a detachable sealing end cover 11; an O-shaped sealing ring 12 is provided between the sealing end cover 11 and an end part of the cylinder 1, and the cylinder 1 is sealed by means of the sealing end cover 11 and the O-shaped sealing ring 12. Compared with the existing square structure, the cylindrical structure of the cylinder 1 has better pressure bearing performance and larger internal capacity, so that the cylinder 1 has sufficient space for arranging a plurality of fiber fusion trays 13 (one of components of the optical fiber splicing tray), thereby meeting the requirements of different optical units 200. A connecting plate is provided inside the cylinder 1; the two sealing end covers 11 are both connected to the connecting plate to form an integral whole; the fiber fusion trays 13 are arranged on the connecting plate.

The optical fiber channel is configured for the optical unit 200 to pass into the interior of the cylinder 1, and the optical unit 200 may specifically be a submarine cable containing optical fibers. Both the inner side edge and the outer side edge of the V-shaped sealing ring 211 have certain elasticity; when the V-shaped sealing ring 211 is installed into the large-diameter section from the outer side end of the large-diameter section, both the inner side edge and the outer side edge of the V-shaped sealing ring 211 may undergo slight deformation and be tightly fitted to the optical unit 200 and an inner side wall of the large-diameter section respectively, and since the V-shaped opening of the V-shaped sealing ring 211 faces the outer side end of the large-diameter section, when a pressure is applied to the V-shaped sealing ring 211 from an outer side of the V-shaped sealing ring 211, both the inner side edge and the outer side edge of the V-shaped sealing ring 211 will show a tendency to move toward an inner side of the large-diameter section, such that the inner side edge and the outer side edge of the V-shaped sealing ring 211 are more tightly fitted to the optical unit 200 and the inner wall of the large-diameter section, resulting in a better sealing effect. The locking shaft 22 abuts against the V-shaped sealing unit 21, thereby preventing the V-shaped sealing unit 21 from detaching from the large-diameter section, and the locking shaft 22 may also apply a pressure to the V-shaped sealing unit 21, thereby enhancing the sealing effect of the V-shaped sealing unit 21.

In the large-water-depth optical fiber splicing box of the present application, a cylindrical cylinder 1 is used as a shell of the large-water-depth optical fiber splicing box to replace the existing square structure, thereby increasing the pressure bearing performance and internal space of the cylinder 1; the V-shaped sealing unit 21 is used to seal the optical fiber channel so as to prevent seawater from entering the interior of the cylinder 1, the V-shaped sealing ring 211 of the V-shaped sealing unit 21 may be fitted to the optical unit 200 and the inner wall of the large-diameter section more tightly under external pressure, such as seawater pressure, and the greater the pressure, the tighter the fitting, forming a self-sealing structure, which can perfectly adapt to large-water-depth working conditions; the locking shaft 22 may tightly compress the V-shaped sealing unit 21 to prevent the V-shaped sealing unit 21 from moving, and may also enable the better sealing effect of the V-shaped sealing unit 21, thereby effectively solving the problem in the prior art of relatively poor pressure bearing performance and sealing performance of the optical fiber splicing box under large-water-depth working conditions.

In some embodiments, the locking shaft 22 is provided with an external thread, and the locking shaft 22 is threadedly connected with the large-diameter section; by rotating the locking shaft 22, the locking shaft 22 may be moved close to or away from the V-shaped sealing unit 21, thereby enhancing the sealing effect of the V-shaped sealing unit 21 without damaging the V-shaped sealing unit 21.

As shown in FIGS. 1-2, in some embodiments, the V-shaped sealing unit 21 includes a pressure ring 212, a V-shaped sealing ring 211 and a support ring 213 sequentially arranged from outside to inside; cross-sections of sides of the pressure ring 212 and the support ring 213 facing the V-shaped sealing ring 211 are both V-shaped; the pressure ring 212 and the support ring 213 are both tightly fitted to the V-shaped sealing ring 211; and the pressure ring 212 abuts against the locking shaft 22.

Specifically, both the pressure ring 212 and the support ring 213 are of rigid structures, and may specifically be made of stainless steel. The support ring 213 is configured to support the V-shaped sealing ring 211, enabling its placement to be more stable; the locking shaft 22 further presses the V-shaped sealing ring 211 by squeezing the pressure ring 212; the V-shaped sealing ring 211 is clamped between the pressure ring 212 and the support ring 213, thereby avoiding damage to the V-shaped sealing ring 211; sides of the pressure ring 212 and the support ring 213 facing the V-shaped sealing ring 211 are both V-shaped, thereby enabling the V-shaped sealing ring 211 to always maintain a V-shaped structure and preventing severe deformation due to being squeezed. Both the inner side edge and the outer side edge of the V-shaped sealing ring 211 extend out of the edges of the pressure ring 212 and the support ring 213, such that the inner side edge and the outer side edge of the V-shaped sealing ring 211 may abut against the optical unit 200 and the inner wall of the large-diameter section respectively. The quantity of the V-shaped sealing ring 211 may be a plurality, specifically four; by performing sealing with the plurality of V-shaped sealing rings 211 simultaneously, the sealing effect is better.

As shown in FIGS. 1-3, in some embodiments, the large-water-depth optical fiber splicing box further includes a second sealing assembly 3; the second sealing assembly 3 is equal in quantity to the optical fiber channel and corresponds one-to-one with the optical fiber channel; the second sealing assembly 3 includes a sealing seat 31; the sealing seat 31 is provided with a sealing hole communicating with the optical fiber channel; the sealing seat 31 is connected to an end part of the cylinder 1; and the sealing seat 31 is adjacent to or abuts against the locking shaft 22.

Specifically, the sealing seat 31 is threadedly connected with the cylinder 1, and a sealing ring is used between them to perform a sealing treatment; by providing the sealing seat 31, the sealing effect is further improved, preventing seawater from directly impacting the locking shaft 22 to cause loosening or rusting of the locking shaft 22; the sealing seat 31 is adjacent to or abuts against the locking shaft 22, thereby preventing the locking shaft 22 from detaching from the large-diameter section due to unexpected situations such as vibration. The sealing seat 31 is provided with a sealing hole, so that the optical unit 200 may pass through the sealing seat 31. A limiting groove is provided on a side of the sealing seat 31 facing the locking shaft 22, and a part of the locking shaft 22 is located in the limiting groove; by providing the limiting groove, mutual limiting between the sealing seat 31 and the locking shaft 22 may be realized, and during the installation of the sealing seat 31, the positioning and installation of the sealing seat 31 can be quickly completed through a matching relationship between the limiting groove and the locking shaft 22.

As shown in FIGS. 1-2, in some embodiments, the second sealing assembly 3 further includes a sealing member 32, and the sealing member 32 is arranged between the optical unit 200 and an inner wall of the sealing hole.

Specifically, the sealing hole is a conical hole, an end with a larger diameter of the conical hole faces away from the locking shaft 22, the sealing member 32 is a conical sealing ring, and the sealing member 32 is sleeved on the optical unit 200. By providing the conical sealing ring, after the sealing member 32 is pressed into the sealing hole, the sealing member 32 may be tightly fitted to the optical unit 200 and a hole wall of the sealing hole; and the greater the pressure applied to the sealing member 32, the tighter the fitting between the sealing member 32 and the optical unit 200 as well as the hole wall of the sealing hole, and the better the sealing effect. Moreover, since the pressure exerted by seawater on the sealing member 32 is greater in places with greater water depth, the sealing member 32 can perfectly exert the sealing effect under large-water-depth working conditions.

As shown in FIGS. 1-3, in some embodiments, the second sealing assembly 3 further includes a first pressure plate 33; the first pressure plate 33 is arranged on a side of the sealing member 32 facing away from the locking shaft 22; the first pressure plate 33 is connected to the sealing seat 31; and the first pressure plate 33 abuts against the sealing member 32.

Specifically, the first pressure plate 33 is connected to the sealing seat 31 through a bolt; and providing the first pressure plate 33 may prevent the sealing member 32 from detaching from the sealing hole.

As shown in FIGS. 1-2, in some embodiments, the large-water-depth optical fiber splicing box further includes an armoring fixing assembly 4; the armoring fixing assembly 4 is arranged inside the cylinder 1; and the armoring fixing assembly 4 is configured to fix an armoring layer 201 of the optical unit 200 extending into the cylinder 1.

Specifically, under working conditions with high external pressure such as large water depth, the external pressure usually squeezes a cable core of the optical unit 200 to enable the cable core to bear axial pressure and move. In the present embodiment, by providing the armoring fixing assembly 4, the armoring layer 201 of the part of the optical unit 200 inside the cylinder 1 is fixed, and thus the optical unit 200 is fixed, thereby improving the mechanical fixing performance between the optical unit 200 and the cylinder 1 and further ensuring the sealing performance.

In some embodiments, the armoring fixing assembly 4 includes a second pressure plate; the second pressure plate is connected to an inner side wall of the cylinder 1, so as to clamp the armoring layer 201 of the optical unit 200 between the second pressure plate and the inner side wall of the cylinder 1.

Specifically, first, the armoring layer 201 of the part of the optical unit 200 inside the cylinder 1 is stripped off (a stripped armoring layer 201 still remains connected to a main body of the optical unit 200); then, the stripped armoring layer 201 is clamped between the second pressure plate and the inner wall of the cylinder 1; finally, the second pressure plate is connected to the cylinder 1 through a bolt, thereby completing the fixing of the armoring layer 201.

It should be noted that both the first pressure plate 33 and the second pressure plate are annular plates, and middle parts of them are provided with through holes for the optical unit 200 to pass through.

The foregoing are only specific implementations of the present application, but the protection scope of the present application is not limited thereto; any person skilled in the art may easily think of changes or substitutions within the technical scope disclosed by the present application, and all such changes or substitutions shall be covered by the protection scope of the present application. Therefore, the protection scope of the present application shall be subject to the protection scope of the appended claims.

## Claims

1. A large-water-depth optical fiber splicing box, comprising: a cylinder and a first sealing assembly;
two opposite ends of the cylinder are each provided with an optical fiber channel communicating with an interior of the cylinder, and the optical fiber channel comprises a large-diameter section and a small-diameter section sequentially arranged from outside to inside;
the first sealing assembly is equal in quantity to the optical fiber channel and corresponds one-to-one with the optical fiber channel, the first sealing assembly comprises a V-shaped sealing unit and a locking shaft wherein the V-shaped sealing unit is annular, the V-shaped sealing unit is arranged in the large-diameter section, and the V-shaped sealing unit is sleeved on an optical unit; the V-shaped sealing unit has at least one V-shaped sealing ring, an inner side edge of the V-shaped sealing ring is fitted to a peripheral wall of the optical unit, an outer side edge of the V-shaped sealing ring is fitted to an inner wall of the large-diameter section, a V-shaped opening of the V-shaped sealing ring faces an outer side end of the large-diameter section; and the locking shaft is arranged at the outer side end of the large-diameter section, the locking shaft is provided with a through hole for the optical unit to pass through, the locking shaft abuts against the V-shaped sealing unit, such that a junction between the large-diameter section and the small-diameter section abuts against the V-shaped sealing unit.

2. The large-water-depth optical fiber splicing box according to claim 1, wherein the V-shaped sealing unit comprises a pressure ring, the V-shaped sealing ring and a support ring sequentially arranged from outside to inside; cross-sections of sides of the pressure ring and the support ring facing the V-shaped sealing ring are both V-shaped, the pressure ring and the support ring are both tightly fitted to the V-shaped sealing ring, and the pressure ring abuts against the locking shaft.

3. The large-water-depth optical fiber splicing box according to claim 1, wherein the locking shaft is provided with an external thread, and the locking shaft is threadedly connected with the large-diameter section.

4. The large-water-depth optical fiber splicing box according to claim 1, wherein the large-water-depth optical fiber splicing box further comprises a second sealing assembly, the second sealing assembly is equal in quantity to the optical fiber channel and corresponds one-to-one with the optical fiber channel, the second sealing assembly comprises a sealing seat, the sealing seat is provided with a sealing hole communicating with the optical fiber channel, the sealing seat is connected to an end part of the cylinder, and the sealing seat is adjacent to or abuts against the locking shaft.

5. The large-water-depth optical fiber splicing box according to claim 4, wherein the sealing seat is provided with a limiting groove, and a part of the locking shaft is located in the limiting groove.

6. The large-water-depth optical fiber splicing box according to claim 4, wherein the second sealing assembly further comprises a sealing member, and the sealing member is arranged between the optical unit and an inner wall of the sealing hole.

7. The large-water-depth optical fiber splicing box according to claim 6, wherein the sealing hole is a conical hole, an end with a larger diameter of the conical hole faces away from the locking shaft, the sealing member is a conical sealing ring, and the sealing member is sleeved on the optical unit.

8. The large-water-depth optical fiber splicing box according to claim 7, wherein the second sealing assembly further comprises a first pressure plate, the first pressure plate is arranged on a side of the sealing member facing away from the locking shaft, the first pressure plate is connected to the sealing seat, and the first pressure plate abuts against the sealing member.

9. The large-water-depth optical fiber splicing box according to claim 1, wherein the large-water-depth optical fiber splicing box further comprises an armoring fixing assembly, the armoring fixing assembly is arranged inside the cylinder, and the armoring fixing assembly is configured to fix an armoring layer of the optical unit extending into the cylinder.

10. The large-water-depth optical fiber splicing box according to claim 9, wherein the armoring fixing assembly comprises a second pressure plate, the second pressure plate is connected to an inner side wall of the cylinder, so as to clamp the armoring layer of the optical unit between the second pressure plate and the inner side wall of the cylinder.
